**Europäisches Patentamt**

**European Patent Office**

**Office européen des brevets**

(19)

(11) Veröffentlichungsnummer: **0 277 284 B1**

# EUROPÄISCHE PATENTSCHRIFT

(12)

(45) Veröffentlichungstag der Patentschrift: **08.01.92**

(51) Int. Cl.5: **C04B 35/52**, C08L 95/00

(21) Anmeldenummer: **87116043.8**

(22) Anmeldetag: **31.10.87**

(54) **Bindemittel für Kohlenstoffmassen und Verfahren zu dessen Herstellung.**

(30) Priorität: **31.01.87 DE 3702950**

(43) Veröffentlichungstag der Anmeldung:
**10.08.88 Patentblatt 88/32**

(45) Bekanntmachung des Hinweises auf die
Patenterteilung:
**08.01.92 Patentblatt 92/02**

(84) Benannte Vertragsstaaten:
**BE DE ES FR GB IT NL**

(56) Entgegenhaltungen:
**EP-A- 0 163 597**
**GB-A- 1 289 081**
**US-A- 4 188 279**

**CHEMICAL ABSTRACTS, Band 92, Nr. 4, 28.
Januar 1980, Seite 181, Zusammenfassung
Nr. 25267e, Columbus, Ohio, US; E.A. YANKO
et al.: "Improvement in the structure of electrode cokes", & TSVETN. MET. 1979, (8),
67-70**

(73) Patentinhaber: **RÜTGERSWERKE AKTIENGE-
SELLSCHAFT**
**Mainzer Landstrasse 217**
**W-6000 Frankfurt am Main 1(DE)**

(72) Erfinder: **Boenigk, Winfried, Dr.**
**Eichenstrasse 15**
**W-4716 Olfen(DE)**
Erfinder: **Alsmeier, Friedhelm**
**Ulmenstrasse 14**
**W-4300 Essen 1(DE)**

## Beschreibung

Die Erfindung betrifft ein Verfahren zur Herstellung eines Bindemittels mit verbesserten Eigenschaften auf Steinkohlenteerbasis für Kohlenstoffmassen.

Kohlenstoffmassen für die Herstellung von Kohlenstoff-Formkörpern wie Anoden, Elektroden und Auskleidungen bestehen aus einer Mischung aus festem Kohlenstoff wie Anthrazit, Pechkoks, Petrolkoks, Ruß usw. und einem carbo- oder petrostämmigen bituminösen Bindemittel . Vorzugsweise enthalten die Massen Petrolkoks und Steinkohlenteerpech. Sie werden überwiegend zur Herstellung von vorgebrannten oder selbstkalzinierenden (Söderberg-)Anoden für die Aluminiumelektrolyse verwendet. Der Verbrauch an Anodenmaterial ist infolge der Nebenreaktionen (Oxidation) und des Anodenzerfalls (Absanden) höher als er für die Reduktion des Aluminiumoxids notwendig wäre.

Es ist bekannt, daß bestimmte Verunreinigungen im Koks und im Bindemittel wie Natrium-, Calcium- und Vanadinverbindungen die Oxidation beschleunigen und daß Zusätze von Bor- oder Phosphorverbindungen inhibierende Wirkungen zeigen (Light Metals, 1982, Seiten 713 -725).

In der US-PS 4,188,279 wird vorgeschlagen, Kohlenstoff-Formkörper aus Kohlenstoffmassen mit 15 bis 35 Gew.-% Bindemittel und 0,1 bis 3 Gew.-% Borverbindungen beziehungsweise 0,5 bis 5 Gew.-% Phosphorverbindungen als Oxidationsinhibitor herzustellen. Dabei wird der Inhibitor dem homogenisierten Gemisch zugegeben oder der Bindemittelkomponente vor der Zugabe der Kohlenstoffkomponente zugemischt.

Es ist ebenfalls möglich, alle drei Komponenten gleichzeitig zusammenzugeben und zu homogenisieren, wie in dem Beispiel beschrieben. Dabei wird der Abbrand durch einen Zusatz von 8 Gew.-% Borsäure, bezogen auf das Steinkohlenteerpech-Bindemittel, um 15 % reduziert.

Es wurde nun gefunden, daß die Zugabe von Borsäure in den angegebenen Mengen zur Bildung von VB und TiB führt, die in der Aluminiumschmelze auskristallisieren und bei der Weiterverarbeitung des Aluminiums zu Folien zur Lochbildung in den Folien führen.

Phosphorverbindungen wie $P_2O_5$ sind ebenfalls weniger geeignete Inhibitoren, da sie die Stromausbeute im elektrolytischen Prozeß mindern.

Aus der EP-A 0 163 597 ist bekannt, zur Herabsetzung der Oxidationsneigung von aus Kohlepulver und Bindemittel hergestellten Kohlekörpern dem Ausgangsmaterial als Oxidationsinhibitor eines der Elemente Ca, Sr, Ba, Ga, Sn, Sb, Mn, Co, Fe oder Ni in Verbindung mit Bor als Borsäure oder deren Salze zuzusetzen.

Der Inhibitor kann zunächst dem Bindemittel zugegeben werden, bevor dieses mit dem Kohlepulver gemischt wird. Obwohl schon Zugaben von 0,01 Gew.-% bezogen auf die Kohlenstoffmasse wirksam sind, wird erst ab einer Konzentration von 0,1 Gew.-% eine unter wirtschaftlichen Gesichtspunkten ausreichende Herabsetzung der Oxireaktivität erreicht. Die Versuche zeigen außerdem, daß eine Dotierung mit Bor allein nur eine vergleichsweise geringe Wirkung hat. Auch hier sind also ähnliche Inhibitormengen , wie in der US-Patentschrift beansprucht, erforderlich, um eine wirksame Herabsetzung der Oxireaktivität zu erreichen.

Es bestand daher die Aufgabe, die Menge der Inhibitoren im Bindemittel bzw. in den Kohlenstoffmassen zu vermindern unter gleichzeitiger Verbesserung ihrer Wirksamkeit.

Erfindungsgemäß wird die Aufgabe dadurch gelöst, daß dem Bindemittel precursor eine solche Menge an Boroxid zugegeben wird, daß der Gehalt im fertigen Bindemittel 0,3 Gew.-% nicht übersteigt, und der Bindemittelprecursor anschließend in üblicher Weise zum Bindemittel weiterverarbeitet wird.

Als Bindemittelprecursor werden abgetoppter Steinkohlenteer oder Destillationsrückstände dieses Teeres mit einem niedrigeren Erweichungspunkt als das Bindemittel verwendet. Nach Zugabe des Boroxids ($B_2O_3$) wird der Precursor durch Vakuum- oder/und Trägergasdestillation in ein oder mehreren Stufen zu dem gewünschten Bindemittel aufgearbeitet.

Vorzugsweise wird ein Steinkohlenteerpech als Precursor verwendet, so daß die Aufarbeitung in einer Stufe, beispielsweise in einer Rührwerksretorte oder einem Dünnschichtverdampfer, unter schonenden Bedingungen durchgeführt werden kann.

Um die Alterungsbeständigkeit des Bindemittels nicht zu vermindern, sollte die Destillation bei Sumpftemperaturen von weniger als 380 °C durchgeführt werden. Dies gilt insbesondere für die Herstellung von Bindemitteln für Söderberg-Massen. In der letzten Destillationsstufe sollte die maximale Sumpftemperatur nicht unter 350 °C liegen, da sonst eine optimale Homogenisierung nicht erreicht wird.

Der Boroxidgehalt im Bindemittel liegt im Bereich von 0,03 bis 0,3 Gew.-%, vorzugsweise bei etwa 0,1 Gew.-%. In diesem Bereich hat die Zugabe von $B_2O_3$ keinen negativen Einfluß auf das Benetzungsverhalten des Bindemittels oder die Verkokungseigenschaften von Pech/Koks-Mischungen.

Die Erfindung wird anhand des Beispiels 1 und der Vergleichsbeispiele 2 und 3 näher erläutert.

EP 0 277 284 B1

Beispiel 1

1000 Gew.-Teile eines Steinkohlenteernormalpechs, charakterisiert durch die in Tabelle 1 aufgeführten Analysenwerte, werden unter Inertgas aufgeschmolzen, auf 180 °C erwärmt und dann mit 1 Gew.-Teil $B_2O_3$ 2 h lang unter Rühren vermischt. Danach wird das Gemisch unter einem Druck von 100 mbar bis zu einer Sumpftemperatur von 360 °C in einer Rührwerksretorte destilliert. In 92%iger Ausbeute wird dabei ein Bindemittel mit den in Tabelle 2 aufgeführten Analysendaten erhalten.

22 Gew.-Teile dieses Bindemittels werden mit 78 Gew.-Teilen Petrolkoks definierter Granulometrie gemischt und zu Formkörpern verpreßt. Die bei 960 °C gebrannten Formkörper werden bei 960 °C im $CO_2$-Strom oxidiert, um die $CO_2$-Reaktivität zu messen.

Die $CO_2$-Reaktivität ist ein Maß für den Anodenverbrauch bei der Aluminium-Elektrolyse. Der gesamte Abbrand setzt sich zusammen aus dem direkten Abbrand und dem Staubanfall, wobei der letztere auch von der Granulometrie des Petrolkokses abhängig ist. Außerdem wurden die Dichte, der spezifische elektrische Widerstand und die Biegefestigkeit der Probekörper bestimmt. Die Ergebnisse sind in der Tabelle 3 wiedergegeben.

Beispiel 2 (Vergleich)

Das Beispiel 2 entspricht dem Beispiel 1, wobei jedoch das Boroxid erst nach der Destillation dem auf 200 °C abgekühlten Bindemittel zugegeben wird. Die Bindemittelausbeute verändert sich dadurch nicht. Die Eigenschaften des Bindemittels sind in Tabelle 2 und die Meßergebnisse an den Probekörpern in Tabelle 3 wiedergegeben.

Beispiel 3 (Vergleich)

Das Beispiel 3 entspricht dem Beispiel 2, jedoch ohne $B_2O_3$-Zugabe. Die Analysenwerte des Bindemittels sind in Tabelle 2 und die Untersuchungsergebnisse an den Probekörpern in Tabelle 3 wiedergegeben.

Tabelle 1

| Analysendaten des Bindemittelprecursors | |
|---|---|
| Erweichungspunkt (Kraemer-Sarnow) | 68 °C |
| Toluolunlösliches (TI) | 26,3 Gew.-% |
| Chinolinunlösliches (QI) | 6,2 Gew.-% |
| Verkokungsrückstand (Alcan) | 51,4 Gew.-% |
| Aschebildner | 0,23 Gew.-% |
| Na-Gehalt | 250 ppm |

Tabelle 2

| Analysendaten der Bindemittel | | | |
|---|---|---|---|
| Beispiel | 1 | 2 | 3 |
| Erweichungspunkt (K.-S.) (°C) | 95 | 94 | 95 |
| TI (Gew.-%) | 30,8 | 30,0 | 30,4 |
| QI (Gew.-%) | 7,0 | 7,1 | 7,0 |
| Verkokungsrückstand (Alcan) (Gew.-%) | 55,9 | 55,3 | 55,7 |

3

Tabelle 3

| Meßwerte am Probekörper | | | |
|---|---|---|---|
| Beispiel | 1 | 2 | 3 |
| $CO_2$-Reaktivität: | | | |
| direkter Abbrand (mg/cm² h) | 15,1 | 17,8 | 18,7 |
| Staubanfall (mg/cm² h) | 4,5 | 5,7 | 6,4 |
| gesamter Abbrand (mg/cm² h) | 19,6 | 23,5 | 25,1 |
| Dichte (kg/dm³) | 1,48 | 1,47 | 1,47 |
| spez. elektrischer Widerstand ($\mu$ m) | 68 | 67 | 67 |
| Biegefestigkeit (10- N/m²) | 261 | 251 | 243 |

Wie die Tabellen 2 und 3 zeigen, bewirkt die Zugabe des Boroxids vor oder nach der Destillation weder eine Veränderung der Analysendaten des Bindemittels noch eine Veränderung der elektrischen oder mechanischen Eigenschaften der daraus hergestellten Probekörper innerhalb der Meßgenauigkeit. Im Gegensatz dazu ist eine deutliche Abhängigkeit der $CO_2$-Reaktivität von der $B_2O_3$-Zugabe erkennbar.

So vermindert sich der gesamte Abbrand bei einer $B_2O_3$-Zugabe nach der Destillation um etwa 7 Gew.-% und bei der erfindungsgemäßen Zugabe vor der Destillation um etwa 22 Gew.-%. Sowohl der direkte Abbrand wie auch der Staubanfall zeigen ähnliche Ergebnisse.

Damit ist erwiesen, daß durch die erfindungsgemäße Zugabe von Boroxid zum Bindemittelprecursor statt, wie aus dem Stand der Technik bekannt, zum fertigen Bindemittel oder zur Kohlenstoffmasse dessen inhibierende Wirkung um ein Vielfaches gesteigert werden kann. Es ist dadurch möglich, mit geringen, für die Aluminiumindustrie tolerierbaren Inhibitormengen den Anodenverbrauch erheblich zu senken.

**Patentansprüche**

1. Verfahren zur Herstellung eines Bindemittels für Kohlenstoffmassen auf der Basis von Steinkohlenteer mit Zusätzen von Borverbindungen als Oxidationsinhibitor, **dadurch gekennzeichnet,** daß dem Bindemittelprecursor eine solche Menge an Boroxid zugegeben wird, daß der Gehalt im fertigen Bindemittel 0,3 Gew.-% nicht übersteigt, und der Bindemittel precursor anschließend in üblicher Weise zum Bindemittel weiterverarbeitet wird.

2. Verfahren nach Anspruch 1, **dadurch gekennzeichnet,** daß als Precursor ein Destillationsrückstand des Steinkohlenteer, insbesondere ein Steinkohlenteernormalpech, verwendet wird.

3. Verfahren nach Anspruch 1, **dadurch gekennzeichnet,** daß das Boroxid in einer solchen Menge zugesetzt wird, daß das fertige Bindemittel 0,03 bis 0,3 Gew.-%, vorzugsweise etwa 0,1 Gew.-% Boroxid enthält.

4. Verfahren nach einem der Ansprüche 1 bis 3, **dadurch gekennzeichnet,** daß das Boroxid mit dem flüssigen Precursor gemischt und das Gemisch durch Vakuum- oder/und Trägergasdestillation in ein oder mehreren Stufen zu dem Kohlenstoffbindemittel weiterverarbeitet wird.

5. Verfahren nach Anspruch 4, **dadurch gekennzeichnet,** daß die maximale Sumpftemperatur bei der letzten Destillationsstufe im Bereich von 350 bis 380 °C liegt.

**Claims**

1. A method of producing a binding agent for carbon compositions on the basis of coal tar with additions of boron compounds as oxidation inhibitor, characterised in that such a quantity of boron oxide is added to the binding agent precursor that the content in the finished binding agent does not exceed 0.3 weight per cent, and the binding agent precursor is subsequently further processed in the usual manner to form the binding agent.

2. A method according to Claim 1, characterised in that a residue from the distillation of the coal tar, in particular a standard pitch of coal tar, is used as precursor.

3. A method according to Claim 1, characterised in that the boron oxide is added in such a quantity that the finished binding agent contains 0. 03 to 0. 3 weight per cent boron oxide, preferably about 0. 1 weight per cent.

4. A method according to any one of Claims 1 to 3, characterised in that the boron oxide is mixed with the liquid precursor and the mixture is further processed by vacuum distillation and/or carrier-gas distillation in one or more stages to form the carbon binding agent.

5. A method according to Claim 4, characterised in that the maximum sump temperature in the last distillation stage is in the region of 350 to 380° C.

**Revendications**

1. Procédé de préparation d'un liant pour masses carbonées à base de goudron de houille avec des additions de composés du bore comme inhibiteur d'oxydation, caractérisé en ce que l'on ajoute au précurseur de liant une quantité d'oxyde de bore telle que sa teneur dans le liant final ne dépasse pas 0,3% en poids et que le précurseur de liant est ensuite transformé ultérieurement en un liant selon la manière habituelle.

2. Procédé selon la revendication 1, caractérisé en ce qu'un résidu de distillation du goudron de houille, notamment un brai standard de goudron de houille est employé comme précurseur.

3. Procédé selon la revendication 1, caractérisé en ce que l'oxyde de bore est ajouté en une quantité telle que le liant final contient 0,03 à 0,3% en poids, de préférence environ 0,1% en poids d'oxyde de bore.

4. Procédé selon l'une des revendications 1 à 3, caractérisé en ce que l'oxyde de bore est mélangé avec le précurseur liquide et que le mélange est transformé ultérieurement en le liant carboné par distillation Sous vide ou/et sous courant de gaz vecteur en une ou plusieurs étapes.

5. Procédé selon la revendication 4, caractérisé en ce que la température maximale du résidu de distillation au cours de la dernière étape de distillation se situe dans la plage de 350 à 380° C.